# EUROPEAN PATENT SPECIFICATION

(11) **EP 3 825 602 B1**
(45) Date of publication and mention of the grant of the patent: **08.03.2023**
(21) Application number: 19425084.1
(22) Date of filing: 20.11.2019
(51) Int. Cl.: F21S 43/237, F21S 43/245, F21S 43/247, F21S 43/14, F21S 43/27, F21S 43/19, F21S 43/31, B60Q 1/00, F21W 105/00

(54) **AUTOMOTIVE LIGHTING AND/OR SIGNALING DEVICE**
BELEUCHTUNGS- UND/ODER SIGNALISIERUNGSVORRICHTUNG FÜR KRAFTFAHRZEUGE
DISPOSITIF D'ÉCLAIRAGE ET/OU DE SIGNALISATION AUTOMOBILE

(43) Date of publication of application: 26.05.2021
(73) Proprietor: Marelli Automotive Lighting Italy S.p.A., 10078 Venaria Reale (TO) (IT)
(72) Inventor: Frijia, Maria Chiara, I-10078 Venaria Reale, Torino (IT); Leone, Fabio, I-10078 Venaria Reale, Torino (IT)
(74) Representative: Mitola, Marco

(56) References cited:
- EP-A1- 1 298 384
- EP-B1- 1 298 384
- FR-A1- 2 936 592
- JP-A- 2002 243 994
- US-A1- 2014 140 088
- US-A1- 2019 011 627
- US-A1- 2019 285 242
- US-A1- 2019 317 262
- US-B2- 10 458 616

## Description

### FIELD OF APPLICATION

The present invention relates to an automotive lighting and/or signaling device.

### BACKGROUND ART

The term automotive lighting and/or signaling device here is used with a very broad meaning in order to comprehend an automotive light, whether a rear or front automotive light, the latter also called headlight or lamp.

Therefore, this includes a position light, a turn signal light, a stop light, a rear fog light, a reverse light, a dipped-beam light, a high beam light and the like.

Moreover, the term is also intended to comprise a map light, an instrument panel or part thereof; thus, the automotive lighting and/or signaling device may be positioned both inside and outside the vehicle.

As is known, said automotive lighting and/or signaling devices may be used both for lighting and for sending visual signals.

For these purposes, said devices comprise a plurality of lighting portions having different colors, different levels of brightness (also according to the legislation to be complied with) and the like.

Over the last few years in particular, lighting and/or signaling devices have increasingly acquired an aesthetical value in addition to a photometric function. In other words, obviously apart from the lighting and/or signaling function that they are to absolve, said lighting and/or signaling devices are increasingly used as design elements within the background of the vehicle in which they are inserted.

For this purpose, it is known to make lighting and/or signaling devices which have lighting portions having particular patterns and/or geometries and/or words or symbols, as requested by automobile manufacturers.

The geometrical possibilities for making such graphic symbols however are rather limited since the light guides, normally used as devices for propagating and illuminating the light emitted by suitable light sources (typically LED sources), have certain geometrical limits, not so much in terms of physical realization as much as in terms of homogeneous scattering and propagation of light beams (for example, in the case of significant curves).

Such problems and limitation to date are resolved by using masks, i.e. bodies which are opaque to light, which are arranged to partially cover light guides.

Such masks in fact are shields which allow any geometry of lighting portion visible from the outside to be obtained by simply starting from a uniformly illuminating matrix, which is at least partially darkened in the required points.

Such an obscuring technique is not particularly effective if filiform lighting portions are to be made, since masks having highly accurate geometries are to be provided and positioned.

Thus, such a known solution has limits in terms of light efficiency (a sizeable portion of the light beam generated is shielded), accuracy/definition of the lighting portions, and also in terms of costs because the addition of the masks on the lenticular body and/or in the containment body of the light, is to be provided.

Shaped light guides may be made *ad hoc* according to the geometries of the lighting portions to be made. However, such a solution has further drawbacks. Indeed, making small guides and/or geometries having significant curves results in problems in terms of production accuracy and costs, in addition to lighting homogeneity limits.

Moreover, it is worth noting that an automotive lighting and/or signaling device is subjected to significant vibrations and accelerations associated with the movement of the vehicle to which it is applied. Such vibrations may easily break optical guides having very thin sizes, or in any case cause vibrations or wobbling of the lighting portions which are not acceptable for the end user. Solutions according to the preamble of claim 1 are disclosed by US2014/140088 A1 and US 2019/317262 A1.

### PRESENTATION OF THE INVENTION

The need is therefore felt to provide an automotive lighting and/or signaling device which allows the above-mentioned technical effects to be obtained in an efficient manner and with an excellent appearance, both in terms of accuracy of the lighting portions and in terms of lighting homogeneity.

Such a need is met by an automotive lighting and/or signaling device according to claim 1.

Other embodiments of the present invention are described in the dependent claims.

### DESCRIPTION OF THE DRAWINGS

Further features and advantages of the present invention will be more comprehensible from the following description of preferred and non-limiting embodiments thereof, in which:

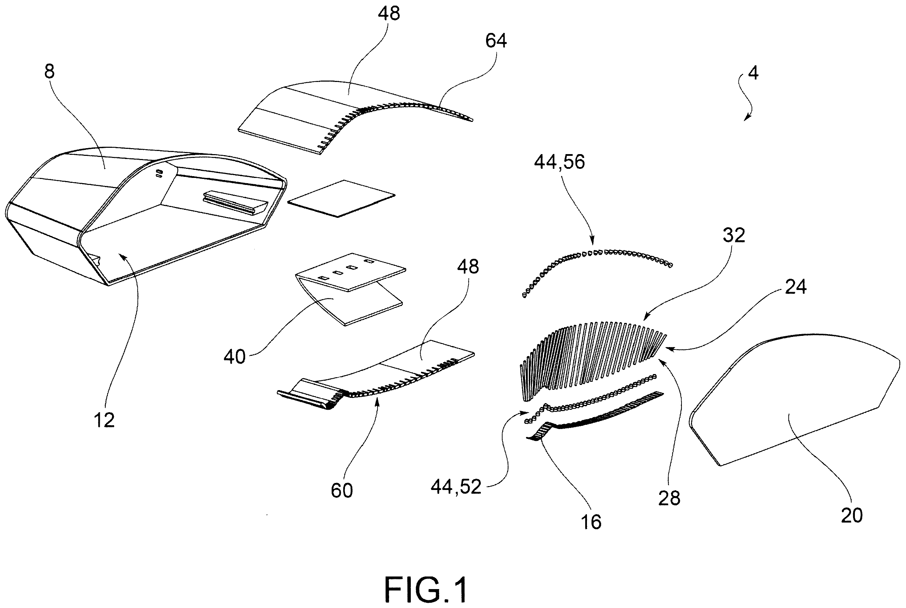

figure 1 depicts a perspective view, in separate parts, of a lighting and/or signaling device according to an embodiment of the present invention;

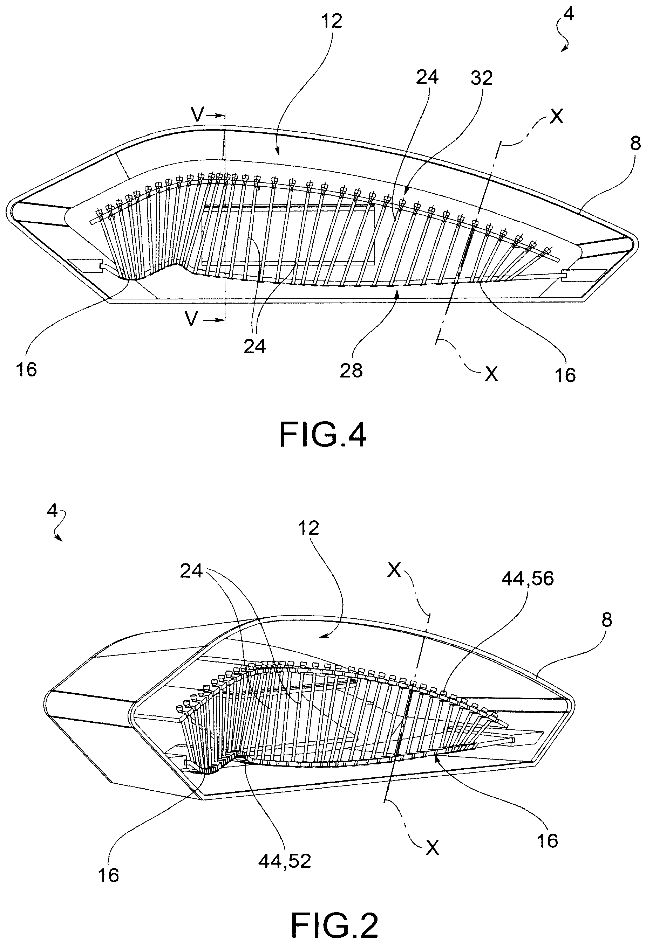

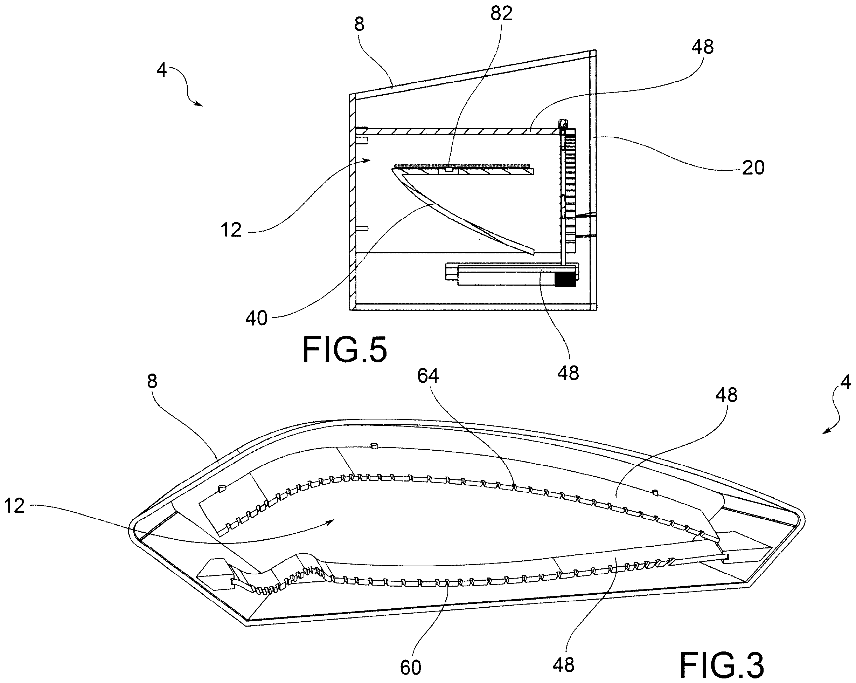

figures 2 to 4 depict perspective views, from different angles and not having different details, of the lighting and/or signaling device in figure 1, in assembled configuration;
figure 5 depicts a sectional view of the lighting and/or signaling device in figure 1, along the sectional line V-V in figure 4;
figure 6 depicts a perspective view of a lighting and/or signaling device according to a further embodiment of the present invention, in assembled configuration;

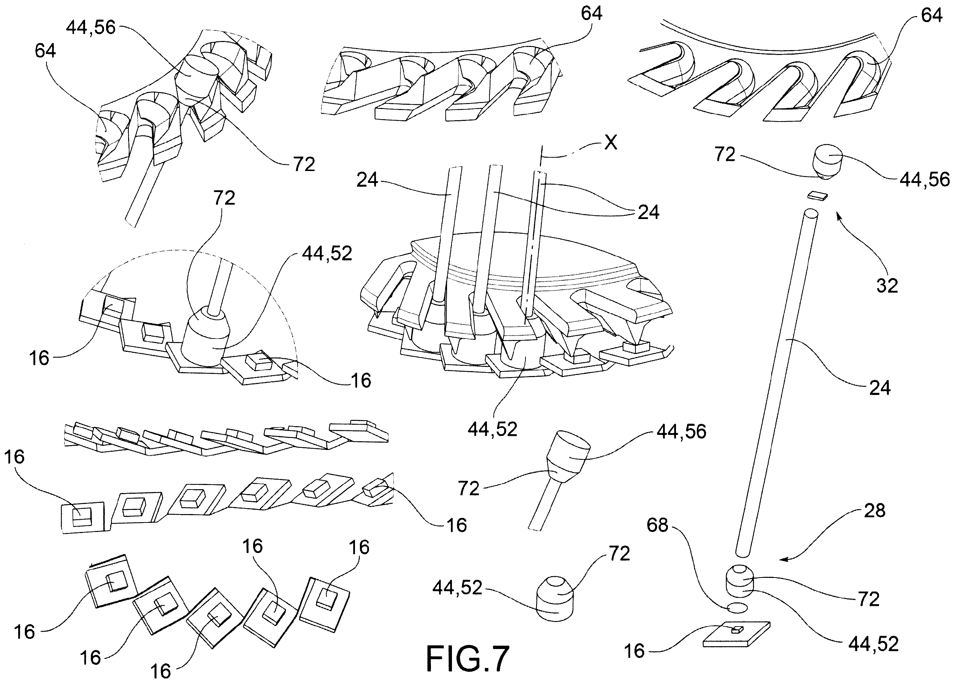

figure 7 depicts sectional views of details of a lighting and/or signaling device according to an embodiment of the present invention;

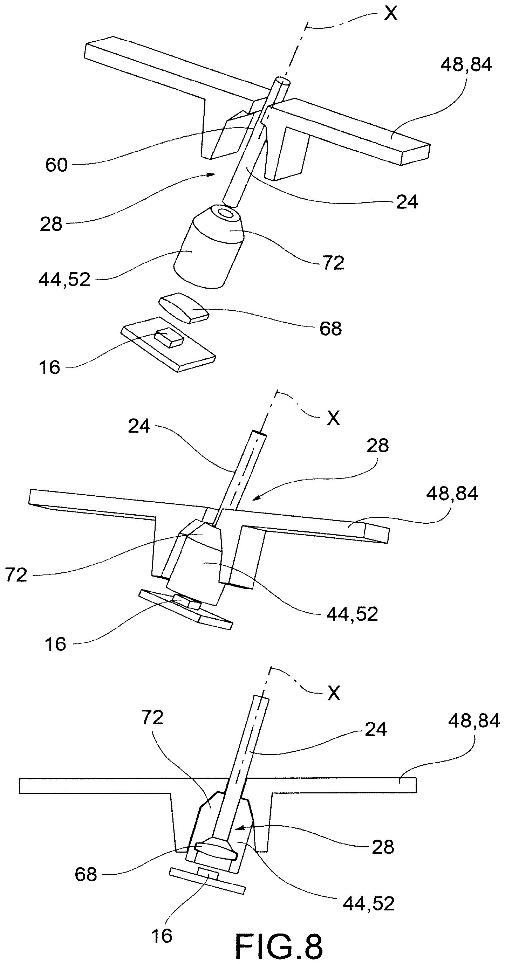

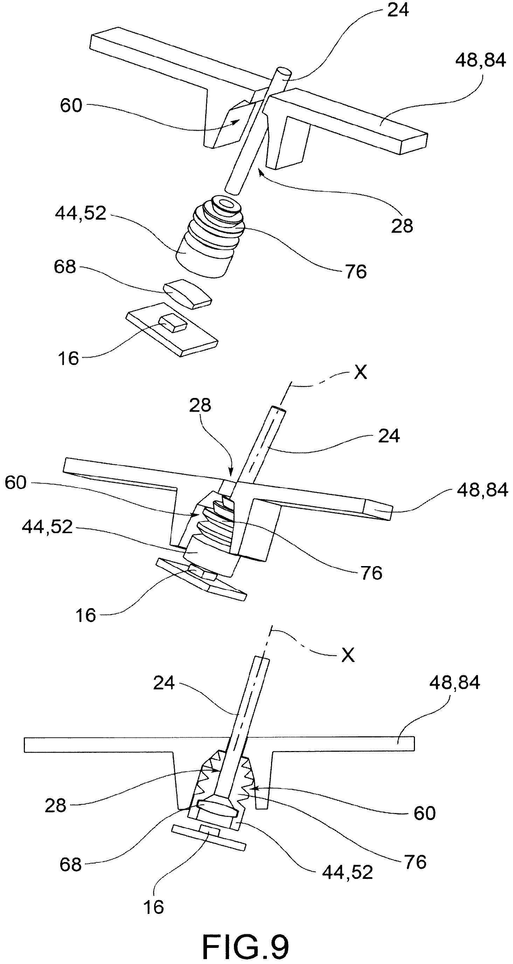

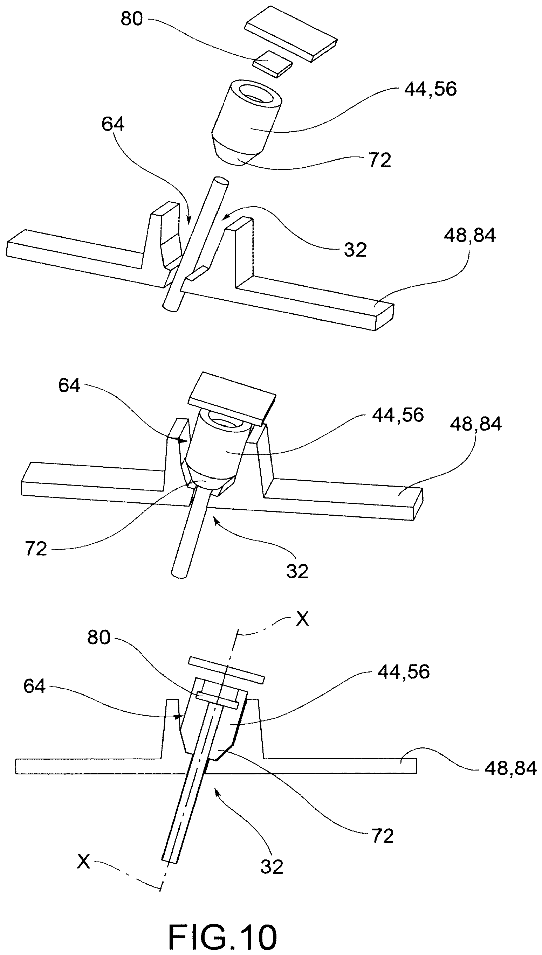

figures 8 to 10 depict perspective views from different angles of possible variants of the present invention, both in assembled configuration and in separate parts;
figure 11 depicts a diagrammatic sectional view of a side emission optical fiber used in a lighting and/or signaling device of the present invention.

The elements or parts of elements common to the embodiments described below will be indicated using the same numerals.

### DETAILED DESCRIPTION

With reference to the aforesaid drawings, a lighting and/or signaling device, such as an automobile light, to which the following disclosure refers without however losing in generality, is indicated as a whole with 4.

As mentioned above, the term lighting and/or signaling device may indifferently mean a rear automotive light or a front automotive light, the latter also called a headlight or lamp, comprising an external vehicle light having a lighting and/or signaling function, such as for example a position light, which may be a front, rear, side position light, a turn signal light, a stop light, a rear fog light, a high beam light, a dipped-beam light and the like.

Moreover, the term lighting and/or signaling device also means an indoor map light, an instrument panel or part thereof, a display, etc.

Thus as better described below, in its signaling function, the device may comprise the possibility of sending light signals, logos, but also words and lit messages of any kind.

The lighting and/or signaling device 4 comprises a containment body or housing 8, usually made of polymeric material, which typically allows fastening the lighting and/or signaling device 4 to the related vehicle or to any type of support.

For the purposes of the present invention, the containment body or housing 8 may have any shape and size, and also positioning: the containment body 8 may not, for example, be directly associated with the body or other external mountings of the associable vehicle.

As shown, the containment body 8 may also be associated internally with the vehicle, for example on the dashboard, on the instrument panel, on the parcel shelf, and so on.

The containment body 8 delimits a containment seat 12 which accommodates a plurality of components of said lighting and/or signaling device.

The containment seat 12 in particular accommodates a plurality of light sources 16, preferably LED light sources or laser light sources, arranged and supported in said containment seat 12.

A lenticular body 20 may be for example associated, at least partially in closing manner, with the containment body 8 so as to close said containment seat 12 which accommodates the at least one light source 16.

For the purposes of the present invention, the lenticular body 20 may be external to the lighting and/or signaling device 4 so as to define at least an outer wall of the lighting and/or signaling device directly subjected to the atmosphere.

The lenticular body 20 closes the containment seat 12 and is adapted to be crossed by the light beam generated by the light sources 16 which is transmitted outside the containment seat 12.

In this regard, the lenticular body 20 is made with material which is at least partially transparent or semitransparent or translucent, one or more opaque portions also being able to be included, in any case so as to allow the at least partial crossing of the light beam generated by the light source.

According to possible embodiments, the material of the lenticular body 20 is a resin such as PMMA, PC and the like.

The lighting and/or signaling device 4 comprises a plurality of optical fibers 24 arranged and supported in said containment seat 12, each optical fiber 24 extending from a first end 28 to a second end 32.

At least one of said light sources 16 is associated with each optical fiber 24, in particular facing at least said first end 28, so as to emit a corresponding light beam into said optical fiber 24, said light beam propagating from the first end 28 towards the second end 32 by total internal reflection. It is worth noting that the distinction between first end 28 and second end 32 is purely indicative; in other words, the first end may be lower or upper. Moreover, the first ends 28 of two adjacent optical fibers 24 may also be inverted with each other, so that one is an upper end and the other a lower end.

Thus, the first end 28 generically is an end through which the light beam of at least one light source is channeled.

Moreover, it may also be provided for at least one of said optical fibers 24 to comprise at least one light source 16 at both the first end 28 and the second end 32. In such a case, the light beam generated by each light source 16 propagates in the optical fiber 24, towards the other light source 16, and vice versa.

The light sources 16 preferably are mechanically and electrically independent from one another. This means that switching each optical fiber 24 ON and OFF may be provided in a completely autonomous manner from the other optical fibers 24.

Moreover, each light source 16 is oriented independently from the corresponding optical fiber 24 by means of a respective first bushing 52 and second bushing 56.

Each optical fiber 24 is a side emission optical fiber; said side emission optical fiber 24 comprises light extraction means 36 arranged between the first end 28 and the second end 32 so as to extract the light from the optical fiber 24 output from the containment body 8, towards the associable lenticular body 20. In the absence of said light extraction means, the optical fiber, as such, would be limited to transmitting light by total internal reflection (TIR) from the first end 28 towards the second end 32 and the light beam would not be transmitted towards the lenticular body 20 in the intermediate positions of the optical fiber itself.

Due to the light extraction means 36, the side emission optical fiber 24 acts as a light guide but unlike the latter, is much thinner, more flexible and is reproducible.

Said side emission optical fibers 24 may be rigid or flexible, individual or in a bundle.

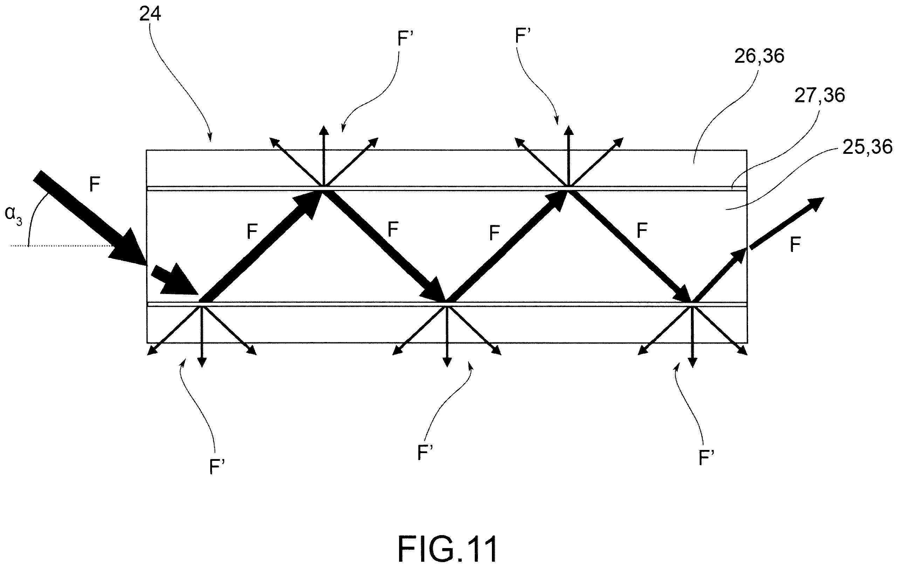

According to a possible embodiment (figure 11), the side emission optical fiber 24 comprises a core 25 covered by a covering or outer jacket 26. Such an overlapping of layers, comprising core 25 and covering 26, is an embodiment of said light extraction means 36. Both core 25 and covering 26 may be made of transparent or colored glass or polymeric material. The side emission of the light rays occurs at an interface 27 between core 25 and covering 26: indeed, a scattering phenomenon of the light rays F occurs at such an interface due to the different optical properties of the materials in contact. Such a scattering is only partial: in other words, part of the light beams F which are incident on interface 27 is reflected internally (according to the regular laws of internal reflection typical of optical fibers) and the other part (F') is scattered externally of the optical fiber.

Some examples of side emission optical fibers described above are made and sold by 'Schott AG' under the name Schott ^{®} SideLight and by `Leoni Fiber Optics GmbH' under the name AmbientFiber^{®}.

It is worth noting that the optical emission of the optical fibers 24 is 360° and therefore is very homogeneous, also at curve areas; moreover, said optical fibers 24 may be highly flexible, thus allowing small curve radiuses (within the order of 5 to 7 mm), allowing an increased freedom in design in terms of length and bending, which is certainly not possible with the standard light guides of the prior art. A further advantage in the design consists of the possibility of obtaining highly defined lines and outlines, due to the mentioned side emission optical fibers 24.

It is worth noting moreover that the light extraction means 36 are structured to extract the light output from the optical fiber 24, overall towards the lenticular body 20, output from the lighting and/or signaling device. The output or extraction of the light beam from the optical fiber 24 may occur in any direction, for example in front direction, i.e. directly towards the lenticular body 20, or also in rear, upper or lower direction, so as to affect a reflecting surface which reflects the beam output through the lenticular body 20. In other words, the extraction of the light beam from the optical fiber 24 towards the lenticular body 20 may be direct and/or also indirect (also only partially).

In this regard, according to a possible embodiment, the containment body 8 comprises a reflecting device 40 arranged at the back with respect to the optical fibers, on the side opposite to the lenticular body 20. Said reflecting device 40 is configured so as to reflect the light beams received from the optical fibers 24 towards the lenticular body 20, output from the lighting and/or signaling device 4.

According to a possible embodiment, a side wall of said optical fibers, comprised between the first end 28 and the second end 32, is provided with an embossed or glazed surface so as to create a scattering effect of the light rays affecting it.

According to a further possible embodiment, the reflecting device 40 is adapted to reflect light emitted from a further light source 82 of the lighting and/or signaling device 4.

According to the present invention, each optical fiber 24 is fastened to the containment body 8 at said first and second ends 28, 32 by means of fastening means 44 to a corresponding support 48 adapted to dampen vibrations. Support 48 typically is fastened to the containment body 8.

According to the present invention, the fastening means 44 comprise a first bushing 52 and a second bushing 56, respectively, preferably made of polymeric material, e.g. elastomeric, at least partially inserted in a corresponding first seat 60 and second seat 64 of the containment body 8.

According to an embodiment, an optical element 68, such as a collimating lens or light beam scattering optics generated by the light source 16, is interposed between the light source 16 and the first end 28 of the optical fiber 24.

Said optical element 68 preferably is accommodated and fastened in said first bushing 52.

According to an embodiment, the first bushing 52 is counter-shaped with respect to the corresponding first seat 60 so as to conveniently orient the position of the optical fiber 24 in the containment body 8. In other words, the coupling between the first bushing 52 and the first seat 60 at least partially ensures the spatial orientation of the optical fiber 24 in the containment body 8.

The first bushing 52 preferably is axisymmetric with respect to a main extension axis X-X of the optical fiber 24. It must firstly be said that main extension axis X-X means an axis which is tangent to the main direction of the optical fiber itself. Such a main extension X-X may be rectilinear but also curvilinear, in which case the main extension axis X-X is tangent to the curvilinear portion at the first end 28 of the optical fiber 24.

According to a possible embodiment, the first bushing 52 comprises at least one truncated-conical portion 72 which interfaces with said first seat 60.

According to a further embodiment, the first bushing 52 comprises at least one bellow portion 76 which interfaces with said first seat 60. The bellow portion 76 is adapted to shape itself to the curve of the optical fiber 24 (when provided). Moreover, the bellow portion 76 serves to compensate for any variations in length of the optical fibers 24 with respect to the nominal value, due both to the failure to comply with the production tolerances and to possible variations caused by the climate cycles during the useful life of the lighting and/or signaling device.

According to an embodiment, the second end 32 of the optical fiber 24 is provided with a reflecting lens 80 shaped so as to reflect the light beam generated by the light source 16 towards the first end 28.

The reflecting lens 80 preferably is accommodated and fastened in said second bushing 56.

According to an embodiment, the second bushing 56 is counter-shaped with respect to the corresponding second seat 64 so as to orient the position of the optical fiber 24 in the containment body 8.

The second bushing 56 preferably is axisymmetric with respect to a main extension axis X-X of the optical fiber 24. As already mentioned, main extension axis X-X means an axis which is tangent to the main direction of the optical fiber itself. Such a main extension X-X may be rectilinear but also curvilinear, in which case the main extension axis X-X is tangent to the curvilinear portion at the second end 32 of the optical fiber 24.

According to a possible embodiment, the second bushing 56 comprises at least one truncated-conical portion 72 which interfaces with said second seat 64.

According to a possible embodiment, the second bushing 56 comprises at least one bellow portion 76 which interfaces with said second seat 64.

Said first seat 60 and second seat 64 preferably are made in support bases or brackets 84 fastened in the containment body 8.

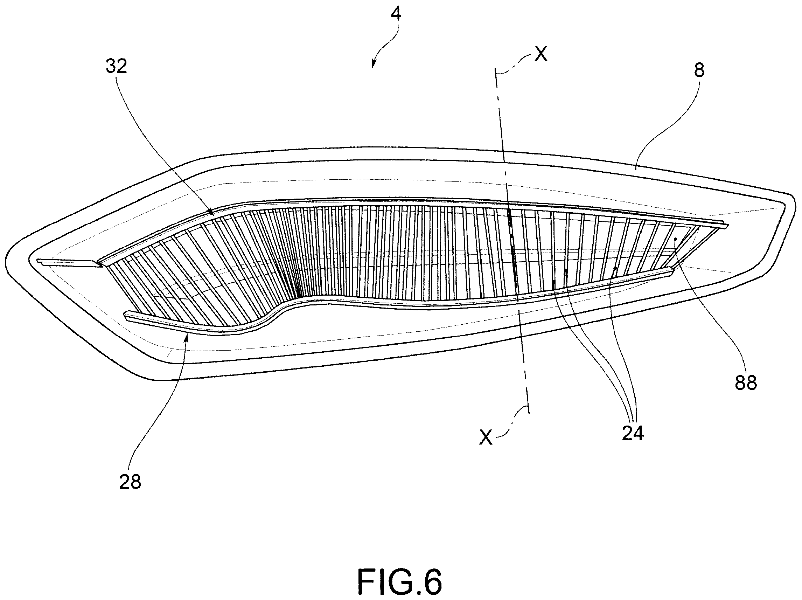

According to a possible embodiment of the present invention (figure 6), the containment body 8 accommodates at least one light guide 88 provided with its own lighting source (not shown) and at least partially intersecting with respect to said plurality of optical fibers 24 so as to obtain respective lighting portions which can at least partially overlap one another. Thereby lighting portions having the same lighting and/or signaling function (in order, for example, to reach the required photometry for a stop vehicle signal) may for example, be at least partially overlapped, or lighting portions may also be overlapped having different lighting and/or signaling functions from one another, such as for example a position function and a signaling of change of direction of the vehicle.

As may be appreciated by what is described, the present invention allows the drawbacks introduced in the known art to be overcome.

In particular, the automotive lighting and/or signaling device according to the present invention allows any filiform geometry of lighting and/or signaling portion to be made without the aid of any type of mask.

Moreover, due to the use of illuminating optical fibers, the solution allows lighting portions to be obtained having highly accurate geometries that are easy to replicate in terms of production in series.

Moreover, despite the highly reduced sizes of the optical fibers, they do not vibrate and/or wobble, also when subjected to strong accelerations of the related automotive vehicle, due to the particular type of fastening means. Moreover, any variations in length of the optical fibers 24 with respect to the nominal value, due both to the failure to comply with the production tolerances and to possible variations caused by the climate cycles during the useful life of the lighting and/or signaling device, may be compensated for due to the fastening means provided.

Indeed, due to the light extraction means with which they are provided, the optical fibers used allow the visual effect of extracting the light of a light guide to be obtained without having the technical limits of a light guide of "traditional" type. In other words, the optical fibers used behave as light guides.

Those skilled in the art, with the object of meeting contingent and specific needs, can make several changes and variants to the lighting and/or signaling devices described above, moreover all contained within the scope of the invention, which is defined by the following claims.

## Claims

1. A lighting and/or signaling device (4), for the automotive industry, comprising:
- a containment body (8) which delimits a containment seat (12) closed by a lenticular body (20),
- a plurality of light sources (16) arranged and supported in said containment seat (12),
- a plurality of optical fibers (24) arranged and supported in said containment seat (12), each optical fiber (24) extending from a first end (28) to a second end (32),
wherein
- at least one of said light sources (16) is associated with each optical fiber (24), in particular facing at least said first end (28), so as to emit a corresponding light beam into said optical fiber (24), said light beam propagating from the first end (28) towards the second end (32) by internal reflection,
- each optical fiber is a side emission optical fiber (24) comprising light extraction means (36) arranged between the first end (28) and the second end (32) so as to extract the light from the optical fiber (24) output from the containment body (8), towards the associable lenticular body (20),
- each optical fiber (24) is fastened to the containment body (8) at said first end (28) and second end (32) by means of fastening means (44) to a corresponding support (48) adapted to pre-orient the optical fibers (24) and/or compensate for the variations in length of the optical fibers (24),
**characterized in that** said fastening means (44) comprise a first bushing (52) and a second bushing (56), respectively, at least partially inserted in a corresponding first seat (60) and second seat (64) of the containment body (8).

2. A lighting and/or signaling device (4) according to claim 1, wherein said first bushing (52) and second bushing (56) are made of polymeric material.

3. A lighting and/or signaling device (4) according to claim 1 or 2, wherein the light sources (16) are mechanically and electrically independent from one another.

4. A lighting and/or signaling device (4) according to claim 1, 2 or 3, wherein each light source (16) is oriented independently from the corresponding optical fiber (24) by means of a respective first bushing (52) and second bushing (56).

5. A lighting and/or signaling device (4) according to claim 1, 2, 3 or 4, wherein said light extraction means (36) comprise a core (25) covered by a covering (26) at an interface (27), said interface creating a scattering by the light beams which are incident thereon, within the optical fiber (24).

6. A lighting and/or signaling device (4) according to claim 1, 2, 3, 4 or 5, wherein an optical element (68), such as a collimating lens or light beam scattering optics generated by the light source (16), is interposed between the light source (16) and the first end (28) of the optical fiber (24).

7. A lighting and/or signaling device (4) according to claim 6 combined with claim 2, wherein said optical element (68) is accommodated and fastened in said first bushing (52).

8. A lighting and/or signaling device (4) according to any one of the preceding claims combined with claim 2, wherein the first bushing (52) is counter-shaped with respect to the corresponding first seat (60) so as to orient the position of the optical fiber (24) in the containment body (8).

9. A lighting and/or signaling device (4) according to any one of the preceding claims combined with claim 2, the first bushing (52) is axisymmetric with respect to a main extension axis (X-X) of the optical fiber (24).

10. A lighting and/or signaling device (4) according to any one of the preceding claims combined with claim 2, wherein the first bushing (52) comprises at least one truncated-conical portion (72) which interfaces with said first seat (60).

11. A lighting and/or signaling device (4) according to any one of the preceding claims combined with claim 2, wherein the first bushing (52) comprises at least one bellow portion (76) which interfaces with said first seat (60).

12. A lighting and/or signaling device (4) according to any one of claims 1 to 11, wherein the second end (32) of the optical fiber (24) is provided with a reflecting lens (80) shaped so as to reflect the light beam generated by the light source (16) towards the first end (28).

13. A lighting and/or signaling device (4) according to claim 12 combined with claim 2, wherein said reflecting lens (80) is accommodated and fastened in said second bushing (56).

14. A lighting and/or signaling device (4) according to any one of the preceding claims 1 to 13 combined with claim 2, wherein the second bushing (56) is counter-shaped with respect to the corresponding second seat (64) so as to orient the position of the optical fiber (24) in the containment body (8).

15. A lighting and/or signaling device (4) according to any one of claims 1 to 14 combined with claim 2, wherein the second bushing (56) is axisymmetric with respect to a main extension axis (X-X) of the optical fiber (24).

16. A lighting and/or signaling device (4) according to any one of the preceding claims 1 to 15 combined with claim 2, wherein the second bushing (56) comprises at least one truncated-conical portion (72) which interfaces with said second seat (64).

17. A lighting and/or signaling device (4) according to any one of the preceding claims 1 to 16 combined with claim 2, wherein the second bushing (56) comprises at least one bellow portion (76) which interfaces with said second seat (64).

18. A lighting and/or signaling device (4) according to any one of the preceding claims, wherein the containment body (8) comprises a reflecting device (40) arranged at the back with respect to the optical fibers (24), on the side opposite to the lenticular body (20).

19. A lighting and/or signaling device (4) according to any one of the preceding claims, wherein at least one of said optical fibers (24) comprises at least one light source (16) at both the first end (28) and the second end (32) .

20. A lighting and/or signaling device (4) according to any one of the preceding claims, wherein said first and second seats (60, 64) are made in support bases or brackets (84) fastened in the containment body (8).

21. A lighting and/or signaling device (4) according to any one of the preceding claims, wherein the containment body (8) accommodates at least one light guide (88) provided with its own lighting source and at least partially intersecting with respect to said plurality of optical fibers (24) so as to obtain respective lighting portions which can at least partially overlap one another.

## Patentansprüche

1. Leucht- und/oder Signalvorrichtung (4) für die Automobilindustrie, umfassend:
- einen Eingrenzungskörper (8), welcher eine Eingrenzungsaufnahme (12) begrenzt, welche durch einen linsenförmigen Körper (20) geschlossen ist,
- eine Mehrzahl von Lichtquellen (16), welche in der Eingrenzungsaufnahme (12) angeordnet und gehaltert sind,
- eine Mehrzahl optischer Fasern (24), welche in der Eingrenzungsaufnahme (12) angeordnet und gehaltert sind, wobei sich jede optische Faser (24) von einem ersten Ende (28) zu einem zweiten Ende (32) erstreckt,
wobei
- wenigstens eine der Lichtquellen (16) jeder optischen Faser (24) zugeordnet ist, insbesondere wenigstens dem ersten Ende (28) zugewandt, um einen entsprechenden Lichtstrahl in die optische Faser (24) zu emittieren, wobei sich der Lichtstrahl durch interne Reflexion von dem ersten Ende (28) in Richtung des zweiten Endes (32) ausbreitet,
- jede optische Faser eine optische Faser (24) mit seitlicher Emission ist, welche Lichtextraktionsmittel (36) umfasst, die zwischen dem ersten Ende (28) und dem zweiten Ende (32) angeordnet sind, um das von dem Eingrenzungskörper (8) ausgegebene Licht von der optischen Faser (24) in Richtung des zuordenbaren linsenförmigen Körpers (20) zu extrahieren,
- jede optische Faser (24) an dem Eingrenzungskörper (8) an dem ersten Ende (28) und dem zweiten Ende (32) mittels Befestigungsmitteln (44) an einer entsprechenden Halterung (48) befestigt ist, welche dazu eingerichtet ist, die optischen Fasern (24) vorab auszurichten und/oder die Längenunterschiede der optischen Fasern (24) zu kompensieren,
**dadurch gekennzeichnet, dass** die Befestigungsmittel (44) eine erste Buchse (52) und eine zweite Buchse (56) umfassen, welche wenigstens teilweise in eine entsprechende erste Aufnahme (60) bzw. eine entsprechende zweite Aufnahme (64) des Eingrenzungskörpers (8) eingesetzt sind.

2. Leucht- und/oder Signalvorrichtung (4) nach Anspruch 1, wobei die erste Buchse (52) und die zweite Buchse (56) aus einem Polymermaterial hergestellt sind.

3. Leucht- und/oder Signalvorrichtung (4) nach Anspruch 1 oder 2, wobei die Lichtquellen (16) mechanisch und elektrisch unabhängig voneinander sind.

4. Leucht- und/oder Signalvorrichtung (4) nach Anspruch 1, 2 oder 3, wobei jede Lichtquelle (16) unabhängig von der entsprechenden optischen Faser (24) mittels einer ersten Buchse (52) bzw. einer zweiten Buchse (56) ausgerichtet ist.

5. Leucht- und/oder Signalvorrichtung (4) nach Anspruch 1, 2, 3 oder 4, wobei die Lichtextraktionsmittel (36) einen Kern (25) umfassen, welcher durch eine Abdeckung (26) an einer Schnittstelle (27) abgedeckt ist, wobei die Schnittstelle innerhalb der optischen Faser (24) eine Streuung durch die Lichtstrahlen schafft, welche darauf auftreffen.

6. Leucht- und/oder Signalvorrichtung (4) nach Anspruch 1, 2, 3, 4 oder 5, wobei ein optisches Element (68), wie etwa eine Kollimationslinse oder Lichtstrahl-Streuoptiken, erzeugt durch die Lichtquelle (16), zwischen der Lichtquelle (16) und dem ersten Ende (28) der optischen Faser (24) eingefügt ist.

7. Leucht- und/oder Signalvorrichtung (4) nach Anspruch 6, kombiniert mit Anspruch 2, wobei das optische Element (68) in der ersten Buchse (52) aufgenommen und befestigt ist.

8. Leucht- und/oder Signalvorrichtung (4) nach einem der vorhergehenden Ansprüche, kombiniert mit Anspruch 2, wobei die erste Buchse (52) in Bezug auf die entsprechende erste Aufnahme (60) gegengeformt ist, um die Position der optischen Faser (24) in dem Eingrenzungskörper (8) auszurichten.

9. Leucht- und/oder Signalvorrichtung (4) nach einem der vorhergehenden Ansprüche, kombiniert mit Anspruch 2, wobei die erste Buchse (52) in Bezug auf eine Haupterstreckungsachse (X-X) der optischen Faser (24) achsensymmetrisch ist.

10. Leucht- und/oder Signalvorrichtung (4) nach einem der vorhergehenden Ansprüche, kombiniert mit Anspruch 2, wobei die erste Buchse (52) wenigstens einen kegelstumpfförmigen Abschnitt (72) umfasst, welcher mit der ersten Aufnahme (60) über eine Schnittstelle verbunden ist.

11. Leucht- und/oder Signalvorrichtung (4) nach einem der vorhergehenden Ansprüche, kombiniert mit Anspruch 2, wobei die erste Buchse (52) wenigstens einen Balgabschnitt (76) umfasst, welcher mit der ersten Aufnahme (60) über eine Schnittstelle verbunden ist.

12. Leucht- und/oder Signalvorrichtung (4) nach einem der Ansprüche 1 bis 11, wobei das zweite Ende (32) der optischen Faser (24) mit einer reflektierenden Linse (80) bereitgestellt ist, welche geformt ist, um den durch die Lichtquelle (16) erzeugten Lichtstrahl in Richtung des ersten Endes (28) zu reflektieren.

13. Leucht- und/oder Signalvorrichtung (4) nach Anspruch 12, kombiniert mit Anspruch 2, wobei die reflektierende Linse (80) in der zweiten Buchse (56) aufgenommen und befestigt ist.

14. Leucht- und/oder Signalvorrichtung (4) nach einem der vorhergehenden Ansprüche 1 bis 13, kombiniert mit Anspruch 2, wobei die zweite Buchse (56) in Bezug auf die entsprechende zweite Aufnahme (64) gegengeformt ist, um die Position der optischen Faser (24) in dem Eingrenzungskörper (8) auszurichten.

15. Leucht- und/oder Signalvorrichtung (4) nach einem der vorhergehenden Ansprüche 1 bis 14, kombiniert mit Anspruch 2, wobei die zweite Buchse (56) in Bezug auf eine Haupterstreckungsachse (X-X) der optischen Faser (24) achsensymmetrisch ist.

16. Leucht- und/oder Signalvorrichtung (4) nach einem der vorhergehenden Ansprüche 1 bis 15, kombiniert mit Anspruch 2, wobei die zweite Buchse (56) wenigstens einen kegelstumpfförmigen Abschnitt (72) umfasst, welcher mit der zweiten Aufnahme (64) über eine Schnittstelle verbunden ist.

17. Leucht- und/oder Signalvorrichtung (4) nach einem der vorhergehenden Ansprüche 1 bis 16, kombiniert mit Anspruch 2, wobei die zweite Buchse (56) wenigstens einen Balgabschnitt (76) umfasst, welcher mit der zweiten Aufnahme (64) über eine Schnittstelle verbunden ist.

18. Leucht- und/oder Signalvorrichtung (4) nach einem der vorhergehenden Ansprüche, wobei der Eingrenzungskörper (8) eine reflektierende Vorrichtung (40) umfasst, welche in Bezug auf die optischen Fasern (24) an der Hinterseite an der Seite entgegengesetzt zu dem linsenförmigen Körper (20) angeordnet ist.

19. Leucht- und/oder Signalvorrichtung (4) nach einem der vorhergehenden Ansprüche, wobei wenigstens eine der optischen Fasern (24) wenigstens eine Lichtquelle (16) an sowohl dem ersten Ende (28) als auch dem zweiten Ende (32) umfasst.

20. Leucht- und/oder Signalvorrichtung (4) nach einem der vorhergehenden Ansprüche, wobei die erste und die zweite Aufnahme (60, 64) in Halterungs-Basen oder Trägern (84) hergestellt sind, welche in dem Eingrenzungskörper (8) befestigt sind.

21. Leucht- und/oder Signalvorrichtung (4) nach einem der vorhergehenden Ansprüche, wobei der Eingrenzungskörper (8) wenigstens eine Lichtführung (88) aufnimmt, welche mit ihrer eigenen Lichtquelle bereitgestellt ist und wenigstens teilweise in Bezug auf die Mehrzahl optischer Fasern (24) schneidet, um jeweilige Leuchtabschnitte zu erhalten, welche wenigstens teilweise einander überlappen können.

## Revendications

1. Dispositif d'éclairage et/ou de signalisation (4) pour l'industrie automobile, comprenant :
- un corps formant contenant (8) qui délimite un siège formant contenant (12) fermé par un corps lenticulaire (20),
- une pluralité de sources de lumière (16) agencées et supportées dans le siège formant contenant (12),
- une pluralité de fibres optiques (24) agencées et supportées dans le siège formant contenant (12), chaque fibre optique (24) s'étendant d'une première extrémité (28) à une deuxième extrémité (32),
où
- au moins une des sources de lumière (16) est associée à chaque fibre optique (24), notamment en regard de ladite première extrémité (28), afin d'émettre un faisceau de lumière correspondant dans ladite fibre optique (24), le faisceau de lumière s'étendant de la première extrémité (28) vers la deuxième extrémité (32) par réflexion interne,
- chaque fibre optique est une fibre optique à émission latérale (24) comprenant des moyens d'extraction de lumière (36) agencés entre la première extrémité (28) et la deuxième extrémité (32) afin d'extraire la lumière de la sortie de la fibre optique (24) du corps formant contenant (8), vers le corps lenticulaire (20) pouvant être associé,
- chaque fibre optique (24) est fixée au corps formant contenant (8) à la première extrémité (28) et la deuxième extrémité (32) par des moyens de fixation (44) sur un support (48) correspondant qui est adapté pour pré-orienter les fibres optiques (24) et/ou pour compenser les variations de longueur des fibres optiques (24),
**caractérisé en ce que** les moyens de fixation (44) comprennent respectivement un premier manchon (52) et un deuxième manchon (56) au moins partiellement insérés dans un premier siège (60) et un deuxième siège (64) correspondants du corps formant siège (8).

2. Dispositif d'éclairage et/ou de signalisation (4) selon la revendication 1, **caractérisé en ce que** le premier manchon (52) et le deuxième manchon (56) sont faits en une matière polymérique.

3. Dispositif d'éclairage et/ou de signalisation (4) selon la revendication 1 ou 2, **caractérisé en ce que** les sources de lumière (16) sont mécaniquement et électriquement indépendantes les unes des autres.

4. Dispositif d'éclairage et/ou de signalisation (4) selon la revendication 1, 2 ou 3, **caractérisé en ce que** chaque source de lumière (16) est orientée indépendamment de la fibre optique (24) correspondante par un premier manchon (52) et un deuxième manchon (56) respectifs.

5. Dispositif d'éclairage et/ou de signalisation (4) selon la revendication 1, 2, 3 ou 4, **caractérisé en ce que** les moyens d'extraction de lumière (36) comprennent un noyau (25) recouvert par une couverture (26) à une interface (27), ladite interface créant dans la fibre optique (24) une diffusion par les faisceaux de lumière incidents là-dessus .

6. Dispositif d'éclairage et/ou de signalisation (4) selon la revendication 1, 2, 3, 4 ou 5, **caractérisé en ce qu'**un élément optique (68) tel qu'une lentille de collimation ou des optiques de diffusion de faisceau de lumière engendrés par la source de lumière (16), est interposé entre la source de lumière (16) et la première extrémité (28) de la fibre optique (24).

7. Dispositif d'éclairage et/ou de signalisation (4) selon la revendication 6 en combinaison avec la revendication 2, **caractérisé en ce que** l'élément optique (68) est logé et fixé dans le premier manchon (52).

8. Dispositif d'éclairage et/ou de signalisation (4) selon l'une des revendications précédentes en combinaison avec la revendication 2, **caractérisé en ce que** le premier manchon (52) est de forme inverse par rapport au premier siège (60) correspondant afin d'orienter la position de la fibre optique (24) dans le corps formant contenant (8).

9. Dispositif d'éclairage et/ou de signalisation (4) selon l'une des revendications précédentes en combinaison avec la revendication 2, **caractérisé en ce que** le premier manchon (52) est axisymétrique par rapport à un axe d'extension principal (X-X) de la fibre optique (24).

10. Dispositif d'éclairage et/ou de signalisation (4) selon l'une des revendications précédentes en combinaison avec la revendication 2, **caractérisé en ce que** le premier manchon (52) comprend au moins une partie tronconique (72) en interface avec le premier siège (60).

11. Dispositif d'éclairage et/ou de signalisation (4) selon l'une des revendications précédentes en combinaison avec la revendication 2, **caractérisé en ce que** le premier manchon (52) comprend au moins une partie soufflet (76) en interface avec le premier siège (60).

12. Dispositif d'éclairage et/ou de signalisation (4) selon l'une des revendications 1 à 11, **caractérisé en ce que** la deuxième extrémité (32) de la fibre optique (24) est pourvue d'une lentille réfléchissante (80) formée de façon à réfléchir le faisceau de lumière engendré par la source de lumière (16) vers la première extrémité (28).

13. Dispositif d'éclairage et/ou de signalisation (4) selon la revendication 12 en combinaison avec la revendication 2, **caractérisé en ce que** la lentille réfléchissante (80) est logée et fixée dans le deuxième manchon (56).

14. Dispositif d'éclairage et/ou de signalisation (4) selon l'une des revendications 1 à 13 en combinaison avec la revendication 2, **caractérisé en ce que** le deuxième manchon (56) est de forme inverse par rapport au deuxième siège (64) correspondant afin d'orienter la position de la fibre optique (24) dans le corps formant contenant (8).

15. Dispositif d'éclairage et/ou de signalisation (4) selon l'une des revendications 1 à 14 en combinaison avec la revendication 2, **caractérisé en ce que** le deuxième manchon (56) est axisymétrique par rapport à un axe d'extension principal (X-X) de la fibre optique (24).

16. Dispositif d'éclairage et/ou de signalisation (4) selon l'une des revendications précédenes 1 à 15 en combinaison avec la revendication 2, **caractérisé en ce que** le deuxième manchon (56) comprend au moins une partie tronconique (72) en interface avec le deuxième siège (64).

17. Dispositif d'éclairage et/ou de signalisation (4) selon l'une des revendications précédentes 1 à 16 en combinaison avec la revendication 2, **caractérisé en ce que** le deuxième manchon (56) comprend au moins une partie soufflet (76) en interface avec le deuxième siège (64).

18. Dispositif d'éclairage et/ou de signalisation (4) selon l'une des revendications précédentes, **caractérisé en ce que** le corps formant contenant (8) comprend un dispositif réfléchissant (40) agencé à l'arrière par rapport aux fibres optiques (24), du côté opposé par rapport au corps lenticulaire (20).

19. Dispositif d'éclairage et/ou de signalisation (4) selon l'une des revendications précédentes, **caractérisé en ce qu'**au moins une des fibres optiques (24) comprend au moins une source de lumière (16) aussi bien à la première extrémité (28) qu'à la deuxième extrémité (32).

20. Dispositif d'éclairage et/ou de signalisation (4) selon l'une des revendications précédentes, **caractérisé en ce que** les premier et deuxième sièges (60, 64) sont constitués dans des bases de support ou crochets (84) fixés dans le corps formant contenant (8).

21. Dispositif d'éclairage et/ou de signalisation (4) selon l'une des revendications précédentes, **caractérisé en ce que** le corps formant contenant (8) loge au moins un guide de lumière (88) pourvu de sa propre source de lumière et s'entrecoupant au moins partiellement par rapport à la pluralité de fibres optiques (24) afin d'obtenir des parties d'éclairage respectives qui peuvent se chevaucher au moins partiellement les unes avec les autres.
